# EUROPÄISCHE PATENTSCHRIFT

(11) **EP 3 586 205 B1**
(45) Veröffentlichungstag und Bekanntmachung des Hinweises auf die Patenterteilung: **16.12.2020**
(21) Anmeldenummer: 18709920.5
(22) Anmeldetag: 21.02.2018
(51) Int. Cl.: G05B 19/416, G05B 19/409, B23Q 15/22, G05B 19/425

(54) **STEUERUNGSVORRICHTUNG UND STEUERUNGSVERFAHREN ZUM STEUERN EINER WERKZEUGMASCHINE**
CONTROL DEVICE AND CONTROL METHOD FOR CONTROLLING A MACHINE TOOL
DISPOSITIF DE COMMANDE ET PROCÉDÉ DE COMMANDE POUR LA COMMANDE D'UNE MACHINE-OUTIL

(30) Priorität: 22.02.2017 DE 102017001701
(43) Veröffentlichungstag der Anmeldung: 01.01.2020
(73) Patentinhaber: Grob-Werke GmbH & Co. KG, 87719 Mindelheim (DE)
(72) Erfinder: KORMANN, Benjamin, 87719 Mindelheim (DE)
(74) Vertreter: KASTEL Patentanwälte PartG mbB
(86) Internationale Anmeldenummer: PCT/DE2018/100149
(87) Internationale Veröffentlichungsnummer: WO 2018/153408

(56) Entgegenhaltungen:
- DE-A1-102012 106 616
- US-A1- 2007 124 904
- US-B1- 6 243 857
- US-B1- 6 263 553

## Beschreibung

Die Erfindung betrifft eine Steuerungsvorrichtung zum Steuern einer Werkzeugmaschine, wobei die Werkzeugmaschine und die Steuerungsvorichtung so gestaltet sind, dass ein an der Werkzeugmaschine angeordnetes Werkzeug und/oder ein an der Werkzeugmaschine angeordnetes Werkstück mit wenigstens einer ersten Geschwindigkeit sowie mit wenigstens einer zweiten Geschwindigkeit bewegbar ist. Die Erfindung betrifft ferner ein Steuerungsverfahren zum Steuern einer Werkzeugmaschine.

Die DE 10 2012 106 616 A1 betrifft eine Werkzeugmaschine zur Bearbeitung von Werkstücken, insbesondere eine Schleifmaschine sowie ein Verfahren zum Positionieren eines Spindelkopfs einer solchen Werkzeugmaschine. Dabei bewegt der Bediener den Spindelkopf mittels eines Griffs und positioniert ihn damit. Es werden Bereiche definiert, in denen verschiedene Geschwindigkeiten für die Bewegung des Spindelkopfs vorgesehen sind. Weiter offenbart diese Druckschrift den Betrieb der Werkzeugmaschine in einem Schrittbetrieb, wobei jede programmierbare Verfahrbewegung vom Bediener durch Betätigen einer Taste freigegeben wird. Beim Steuern der Werkzeugmaschine sind die Schritte vorgesehen:
- Starten eines Programmablaufs durch den Bediener, wobei der Programmablauf eine Abfolge von Bewegungen eines Werkzeugs und/oder des Werkstücks mit unterschiedlichen Geschwindigkeiten aufweist,
- Anhalten des Programmablaufs durch eine Steuerungsvorrichtung der Werkzeugmaschine und
- Auslösen eines Ausführens der zweiten Bewegung durch eine Bedienereingabe an einer an der Steuerungsvorrichtung der Werkzeugmaschine vorgesehenen Eingabevorrichtung.

Die US 6 263 553 B1 und US 2007/124904 A1 offenbaren jeweils eine Werkzeugmaschine, welche in einem Schritt-Betrieb betrieben werden, wobei jede programmierte Verfahrbewegung vom Bediener durch Betätigen einer Taste freigegeben wird.

Die US 6 243 857 B1 offenbart einen Debugger für einen Roboter, wobei in dem Betriebsprogramm beliebige "Breakpoints" eingefügt werden können, an denen der Roboter angehalten wird und nur dann verfahren wird, wenn der Benutzer durch Betätigen einer Taste die Weiterfahrt freigibt.

Beim Einfahren einer computergesteuerten Werkzeugmaschine (CNC-Maschine) wird ein Computerprogramm (NC-Programm), in dem unter anderem die durch die Werkzeugmaschine an einem Werkstück durchzuführenden Bearbeitungsschritte festgelegt sind, durch einen Bediener schrittweise durchgeführt, um das Programm bezüglich seiner Korrektheit und Ausführbarkeit für den gewünschten Bearbeitungsvorgang zu überprüfen. Dadurch können beispielsweise fehlerhafte Bearbeitungsschritte erkannt oder Kollisionen zwischen Werkzeug und Werkstück e bei einer Vorschub- oder Positionierbewegung verhindert werden.

Hierzu bieten die Steuerungen von Werkzeugmaschinen in der Regel die Möglichkeit, das NC-Programm in einem Einzelsatzmodus ablaufen zu lassen. Hierbei wird der Programmablauf nach jedem einzelnen Programmschritt angehalten, und die Fortführung des Programms, d.h. das Ausführen des nachfolgenden Programmschritts, wird durch eine Bedienereingabe ausgelöst.

Nachteilig ist hier, dass eine Bedienereingabe zum Ausführen des nachfolgenden Programmschritts nach jedem einzelnen Programmschritt erforderlich ist. Um das gesamte NC-Programm in allen Enzelschritten zu testen, ist daher ein erheblicher Umfang an Bedienereingaben erforderlich. Dies verlängert den Zeitbedarf zum Einfahren erheblich.

Oftmals ist es jedoch nicht erforderlich, alle Schritte einzeln auszuführen. Eine Vielzahl von Schritten kann auch zusammenhängend ausgeführt werden, und nur bei bestimmten Schritten, z.B. schnellen Eilgang- bzw. Positionierbewegungen, ist es erforderlich, vor der Ausführung des Programms anzuhalten und den entsprechenden Schritt durch eine gesonderte Bedienereingabe auszulösen. Besonders kritische Situationen sind dabei Stellen im Programm, bei denen der Folgesatz, d.h. die Bewegung im nachfolgenden Programmschritt, erheblich schneller ist als der vorhergehende Satz. Bei derartigen Situationen hat der Bediener kaum die Möglichkeit, auf eine fehlerhafte Bewegung zu reagieren.

Beim Einfahren eines NC-Programms möchte der Bediener häufig eine Reihe von Vorschubbewegungen, die in aufeinanderfolgenden Programmschritten festgelegt sind, zusammenhängend durchführen, ohne jedoch von einer anschließend folgenden Eilgangbewegung mit hoher Geschwindigkeit überrascht zu werden. Vielmehr möchte er die anschließende Eilgangbewegung kontrolliert durchführen und ggf. durch eine gesonderte Bedienereingabe auslösen, um beispielsweise zu vermeiden, dass das Werkzeug mit hoher Geschwindigkeit mit dem Werkstück kollidiert.

Um dieses zu ermöglichen, sind Werkzeugmaschinensteuerungen bekannt, deren Bedienelemente über sog. Override-Potentiometer verfügen. Häufig sind dabei zwei getrennte Override-Potentiometer vorhanden. Das erste Override-Potentiometer, auch als Vorschub-Override-Potentiometer bezeichnet, beeinflußt dabei üblicherweise Geschwindigkeiten von Vorschubbewegungen, d.h. den Bewegungen mit in der Regel niedriger Geschwindigkeit, die das Werkzeug, das Werkstück oder beide relativ zueinander durchführen, wenn das Werkzeug das Werkstück bearbeitet. Durch Einstellen des ersten Override-Potentiometers kann die Vorschubgeschwindigkeit, die bei Ausführen eines Programmschritts im NC-Programm für den jeweiligen Bearbeitungsschritt festgelegt wurde, angepaßt, und dabei insbesondere herabgesetzt werden. Das zweite Override-Potentiometer (Eilgang-Override-Potentiometer) beeinflußt Geschwindigkeiten im Eilgang, d.h. den Bewegungen mit im Vergleich zu Vorschubbewegungen in der Regel hoher Geschwindigkeit, die das Werkzeug, das Werkstück oder beide relativ zueinander durchführen, wenn das Werkzeug relativ zum Werkstück positioniert wird. Durch Einstellen des zweiten Override-Potentiometers kann die Eilgang- bzw. Positioniergeschwindigkeit, die bei Ausführen einer Positionierbewegung durch das NC-Programm vorgegeben wird, angepaßt, insbesondere herabgesetzt werden.

Um nicht von einer auf eine Abfolge von Vorschubbewegungen folgende Eilgangbewegung überrascht zu werden, sondern die Eilgangbewegung kontrolliert und mit nicht vom Programm, sondern vom Bediener vorgegebener Geschwindigkeit auszuführen, stellt der Bediener zunächst das Eilgang-Potentiometer auf 0%. Wenn nach einer Abfolge von Programmschritten mit Vorschubbewegung dann ein Programmschritt mit einer Eilgangbewegung folgt, bleibt die Werkzeugmaschine, d.h. das Werkzeug und/oder das Werkstück, zunächst so lange stehen, bis der Bediener das Eilgang-Potentiometer bewußt aufdreht. Dadurch kann die Eilgangbewegung durch den Bediener kontrolliert ausgelöst werden, und die Ausführungsgeschwindigkeit kann durch den Bediener beeinflußt werden. Die Eilgang-Bewegung startet nicht mit der aktuellen Einstellung des Vorschub-Override-Potentiometers, das in diesem Moment in der Regel sehr schnell eingestellt ist, sondern kann langsam und kontrolliert mit dem separaten Eilgang-Override-Potentiometer gestartet werden.

Nachteilig ist hier einerseits, dass zusätzliche Bauteile in Form von Override-Potentiometern bzw. zumindest ein zweites Override-Potentiometer benötigt werden. Nachteilig ist hier jedoch insbesondere, dass es für den Bediener erforderlich ist, nach Ausführung jeder einzelnen Eilgangbewegung während nachfolgenden Vorschubbewegungen das Eilgangpotentiometer wieder auf die Position 0% zurückzustellen, damit auch nachfolgende Eilgangbewegungen zunächst wieder angehalten und dann vom Bediener kontrolliert ausgeführt werden können. Vergißt er dies, so wird eine spätere Eilgangbewegung automatisch durch das Programm mit der von diesem vorgegebenen Geschwindigkeit durchgeführt, so dass der Bediener hierüber keine Kontrolle mehr hat und eventuelle Kollisionen zwischen Werkzeug und Werkstück deshalb ggf. nicht mehr vermeiden kann.

Es ist daher die Aufgabe der vorliegenden Erfindung, eine Steuerungsvorrichtung und ein Steuerungsverfahren zum Steuern einer Werkzeugmaschine bereitzustellen, mit denen der Bediener die Ausführung von schnellen Bewegungen von Werkzeug und/oder Werkstück bei jeder derartigen Bewegung kontrolliert auslösen kann, und wobei ein automatisches Anhalten vor der Ausführung von schnellen Bewegungen durch die Werkzeugmaschinensteuerung stets sichergestellt ist.

Diese Aufgabe wird durch eine Steuerungsvorrichtung zum Steuern einer Werkzeugmaschine mit den Merkmalen des Anspruchs 1 sowie durch ein Steuerungsverfahren zum Steuern einer Werkzeugmaschine mit den Verfahrensschritten des Anspruchs 5 gelöst. Vorteilhafte Ausführungsformen der Erfindung ergeben sich aus den Unteransprüchen.

Bei einer erfindungsgemäßen Steuerungsvorrichtung zum Steuern einer Werkzeugmaschine sind die Werkzeugmaschine und die Steuerungsvorichtung so gestaltet, dass ein an der Werkzeugmaschine angeordnetes Werkzeug und/oder ein an der Werkzeugmaschine angeordnetes Werkzeug mit wenigstens einer ersten Geschwindigkeit sowie mit wenigstens einer zweiten Geschwindigkeit bewegbar ist. Die Steuerungsvorrichtung ist dabei des Weiteren so gestaltet, dass beim Wechsel von einer Bewegung mit der ersten Geschwindigkeit auf eine Bewegung mit der zweiten Geschwindigkeit das Werkzeug oder das Werkstück vor dem Ausführen der Bewegung mit der zweiten Geschwindigkeit zunächst angehalten wird, wenn die zweite Geschwindigkeit mindestens um einen vorgegebenen Faktor größer als die erste Geschwindigkeit ist. Die Steuerungsvorrichtung weist eine Eingabevorrichtung zum Auslösen der Bewegung mit der zweiten Geschwindigkeit auf, und das nachfolgende Ausführen der Bewegung mit der zweiten Geschwindigkeit wird durch eine Bedienereingabe an der Eingabevorrichtung ausgelöst.

Liegt die Geschwindigkeit der zweiten, auf die Bewegung mit der ersten Geschwindigkeit folgenden Bewegung mindestens um einen Faktor höher, d.h. ist die zweite Bewegung mindestens um den vorgegebenen Faktor schneller als die erste Bewegung, dann wird die Ausführung des Programms, d.h. die Durchführung der nachfolgenden Bewegung von Werkzeug und/oder Werkstück, zunächst angehalten. Der Faktor kann beliebige Werte aufweisen, insbesondere Werte größer als 1. Das Anhalten kann insbesondere dann erfolgen, wenn die Geschwindigkeit bei der Bewegung mit der zweiten Geschwindigkeit mindestens um den Faktor 2 höher ist als die Geschwindigkeit bei der Bewegung mit der ersten Geschwindigkeit. Jedoch können auch andere Faktoren verwendet werden, beispielsweise der Faktor 10 oder beliebige Faktoren aus dem Intervall zwischen 2 und 10. Der Faktor kann an der Steuerungsvorrichtung eingegeben werden, beispielsweise durch Tasteneingabe oder ein Potentiometer, oder auch in der Steuerung fest einprogrammiert und/oder durch ein Auswahlmenü oder einen Berührbildschirm auswählbar sein.

Die programmtechnische Umsetzung muss zur Ausführung der Erfindung nicht zwangsläufig programmtechnisch durch Vorsehen eines Faktors eines Faktors zwischen den beiden Geschwindigkeiten erfolgen. Das Kriterium, das Programm vor Ausführen der zweiten Bewegung zu unterbrechen, kann programmtechnisch auch beispielsweise dadurch umgesetzt werden, dass das Programm vor Ausführen der zweiten Bewegung unterbrochen wird, wenn die zweite Geschwindigkeit um einen (beispielsweise additiven) Schwellwert größer als die erste Geschwindigkeit ist. Auch dann liegt im Ergebnis ein Faktor zwischen der ersten und der zweiten Geschwindigkeit vor, so dass dieselbe Wirkung erzeugt wird wie bei der tatsächlichen Implementierung unter Verwendung eines multiplikativen Faktors, so dass auch eine derartige Umsetzung unter den beanspruchten Schutzbereich fällt. Dasselbe gilt, wenn als Kriterium für die Programmunterbrechung die zweite Geschwindigkeit lediglich mit einem absoluten schwellwert verglichen wird, ohne hierbei die erste Geschwindigkeit in den Vergleich einzubeziehen. Auch dann liegt trotzdem im Ergebnis zwischen den beiden Geschwindigkeiten stets ein Faktor vor, und wenn die erste Geschwindigkeit kleiner als der Schwellwert ist,dann ist der Faktor, der sich aus dem Quotienten der zweiten Geschwindigkeit bei Programmunterbrechung und der ersten Geschwindigkeit ergibt, stets größer als 1.

Durch die an der erfindungsgemäßen Steuerungsvorrichtung vorgesehene Eingabevorrichtung wird dann die Bewegung mit der zweiten, gegenüber der ersten Geschwindigkeit mindestens um den vorgegebenen Faktor höheren Geschwindigkeit durch den Bediener ausgelöst. Erst durch das Auslösen wird der Programmschritt des NC-Programms, durch den die Bewegung mit der höheren Geschwindigkeit vorgegeben wird, ausgelöst.

Eine im Sinne der Erfindung ausgebildete Steuerungsvorrichtung zum Steuern einer Werkzeugmaschine zeichnet sich vor allem dadurch aus, dass eine Bewegung mit einer höheren Geschwindigkeit, d.h. eine schnelle Bewegung, jedes Mal automatisch angehalten werden kann, wenn sie auf eine vorangehende Bewegung mit einer niedrigeren Geschwindigkeit, d.h. eine langsamere Bewegung, folgt, ohne dass es hierfür besonderer Eingriffe durch den Bediener bedarf. Dadurch ist sichergestellt, dass die Werkzeugmaschine bzw. das NC-Programm jedes Mal vor dem Durchführen einer schnellen Bewegung zunächst automatisch anhält, so dass ein versehentliches Ausführen einer schnellen Bewegung, und dadurch ggf. verursachte Kollisionen, sicher verhindert werden können. Das anschließende Ausführen der Bewegung erfordert hierbei stets eine Bestätigung durch den Bediener. Hierfür ist kein zweites Potentiometer erforderlich, vielmehr genügt hierfür beispielsweise eine der an den Bedieneinrichtungen der Werkzeugmaschinensteuerung vorhandenen Tasten. Dadurch können die Bewegungen mit einem einzigen Bedienelement gesteuert werden, ohne dass die Aufmerksamkeit des Bedieners durch "blindes" Suchen der Bedienelemente abgelenkt wird (der Bediener richtet beim Einfahren seine Aufmerksamkeit überwiegend auf Werkstück und Werkzeug selbst, und nicht auf die Bedienelemente der Steuerung, die er weitgehend blind bedient).

Vorteilhaft ist dabei insbesondere, dass bei einer im Sinne der Erfindung ausgebildeten Steuerungsvorrichtung zum Steuern einer Werkzeugmaschine durch den vorgebbarenFaktor vorgegeben bzw. eingestellt werden kann, bei welchen Geschwindigkeitsunterschieden zwischen einer ersten, langsameren Bewegung und einer nachfolgenden zweiten, schnelleren Bewegung die Ausführung des Programms und damit die Durchführung der zweiten Bewegung zunächst angehalten und durch eine Bedienereingabe fortgeführt werden kann.

In der erfindungsemäßen Steuerungsvorrichtung kann die erfindungsgemäße Funktion deaktivierbar gestaltet werden, so dasss der Bediener auswählen kann, ob er die Funktion nutzen möchte, oder ob er die eingangs beschriebene herkömmliche Einzelgang-Funktion nutzen möchte.

In einer vorteilhaften Ausgestaltung der erfindungsgemäßen Steuerungsvorrichtung ist die Eingabevorrichtung eine Freigabetaste, ein Freigabe-Kippschalter, ein Freigabe-Drehschalter oder ein Potentiometer mit Zug- oder Druckschalterfunktion. Nach dem Anhalten des Programms vor Beginn der Bewegung mit der zweiten, höheren Geschwindigkeit kann der Bediener die zweite Bewegung durch Eingabe an der Eingabevorrichtung auslösen. Eine Taste ermöglicht eine einfache Eingabe an einem bereits üblicherweise an einer Werkzeugmaschinensteuerung vorhandenen Bedienelement, d.h. es kann eine bereits vorhandene Taste entsprechend umprogrammiert werden. Durch Kipp- oder Drehschalter kann hingegen die Stellung des Eingabeelements überwacht werden.

In einer weiteren vorteilhaften Ausgestaltung der erfindungsgemäßen Steuerungsvorrichtung weist die Steuerungsvorrichtung eine weitere Eingabevorrichtung zum Beeinflussen der Geschwindigkeit der Bewegung mit der zweiten Geschwindigkeit auf. Durch die weitere Eingabevorrichtung ist es möglich, die Geschwindigkeit der zweiten Bewegung zu beeinflussen und abweichend von der im NC-Programm festgelegten Geschwindigkeit die zweite, schnellere Bewegung beispielsweise mit einer geringeren Geschwindigkeit durchzuführen als im Programm vorgegeben, so dass hierbei beispielsweise Kollisionen zwischen Werkzeug und Werkstück rechtzeitig erkannt werden können. Das Beeinflussen der Geschwindigkeit der Bewegung mit der zweiten Geschwindigkeit kann beispielsweise durch ein Potentiometer oder auch durch Tastatureingabe, einen Berührbildschirm oder entsprechende Menüpunkte der Steuerungsvorrichtung der Werkzeugmaschine erfolgen.

Während es grundsätzlich bei der Erfindung nicht zwingend notwendig ist, die Geschwindigkeit der zweiten Bewegung, beispielsweise einer Eilgang-Bewegung, durch den Bediener manuell beeinflussen zu können, so ist es doch vorteilhaft, wenn dies möglich ist. Zwar entfällt bei der vorliegenden Erfindung ein separates Eilgang-Override-Potentiometer, jedoch wird die Steuerung der Werkzeugmaschine in der Regel weiterhin zumindest über ein Override-Potentiometer, beispielsweise ein Vorschub-Override-Potentiometer verfügen. Dieses kann in der vorstehend beschriebenen vorteilhaften Ausgestaltung der Erfindung dann auch dazu genutzt werden, auch die Geschwindigkeit der zweiten, schnelleren Bewegung, beispielsweise einer Eilgang-Bewegung, zu beeinflussen. Die Unterbrechung des Programms beim Wechsel von einer ersten, langsameren Bewegung auf eine zweite, schnellere Bewegung kann dann dazu genutzt werden, das Override-Potentiometer auf 0 zu drehen, bevor die nächste Bewegung gestartet wird. Dann kann nach dem Starten der nächsten Bewegung das Override-Potentiometer (bzw. auch ein beliebiges anderes geschwindigkeitsbeeinflussendes Bedienelement, beispielsweise Schnell-Langsam-Tasten) langsam hochgedreht werden, um die Geschwindigkeit der Bewegung kontrollieren zu können.

In einer weiteren vorteilhaften Ausgestaltung der erfindungsgemäßen Steuerungsvorrichtung ist die Bewegung mit der ersten Geschwindigkeit eine Vorschubbewegung und die Bewegung mit der zweiten Geschwindigkeit ist eine Eilgangbewegung. Als Eilgang wird üblicherweise eine schnelle Positionierbewegung bezeichnet, bei der sich ein Werkzeug nicht im Eingriff an einem Werkstück befindet. Die Bewegung während der Bearbeitung eines Werkstücks durch das Werkzeug wird hingegen üblicherweise als Vorschub bezeichnet. Die Eilgangbewegung ist üblicherweise erheblich schneller als die Vorschubbewegung. Während bei einer Vorschubbewegung Fehler durch den Bediener aufgrund der langsamen Geschwindigkeit in der Regel rechtzeitig erkannt werden können, ist die Reaktion auf falsche Eilgangbewegung, beispielsweise die Erkennung von Kollisionen, in der Regel nicht möglich. Deshalb ist es für den Bediener erforderlich, vor einer Eilgangbewegung zunächst anzuhalten, soweit vorhanden den Override-Potentiometer auf 0 zu drehen, die Stellung von Werkzeug und Werkstück relativ zueinander, insbesondere ihren Abstand, zu überprüfen, dann im Programm nachzusehen, welcher Weg bei der nachfolgenden Eilgangbewegung zurückgelegt werden soll, anschließend zu beurteilen, ob dieser Weg kollisionsfrei zurückgelegt werden kann, und erst anschließend die Eilgangbewegung auszulösen. Dies wird durch die erfindungsgemäße Steuerungsvorrichtung ermöglicht.

Bei einem erfindungsgemäßen Steuerungsverfahren zum Steuern einer Werkzeugmaschine wird zunächst ein Programmablauf durch einen Bediener gestartet, wobei der Programmablauf eine Abfolge von Bewegungen eines Werkzeugs und/oder eines Werkstücks mit unterschiedlichen Geschwindigkeiten aufweist.

Der Programmablauf wird dann durch eine Steuerungsvorrichtung der Werkzeugmaschine beim Wechsel von einer Bewegung mit einer ersten Geschwindigkeit in eine nachfolgende Bewegung mit einer zweiten Geschwindigkeit angehalten, bevor die Bewegung mit der zweiten Geschwindigkeit ausgeführt wird, wenn die zweite Geschwindigkeit mindestens um einen vorgegebenen Faktor größer als die erste Geschwindigkeit ist.

Ein Auslösen des Ausführens der zweiten Bewegung erfolgt dann durch eine Bedienereingabe an einer an der Steuerungsvorrichtung der Werkzeugmaschine vorgesehenen Eingabevorrichtung.

Bei der Bewegung mit der zweiten Geschwindigkeit ist die Geschwindigkeit somit mindestens um einen vorgegebenen Faktor schneller als bei der Bewegung mit der ersten Geschwindigkeit, wenn das Programm vor Beginn der Bewegung mit der zweiten Geschwindigkeit angehalten wird. Bei der Bewegung mit der zweiten Geschwindigkeit kann es sich beispielsweise um einen Eilgang und bei der Bewegung mit der ersten Geschwindigkeit um eine Vorschubbewegung handeln. Der Faktor, um den sich die Geschwindigkeiten unterscheiden, kann vorzugsweise im Bereich zwischen 2 und 10 liegen

In einer vorteilhaften Ausgestaltung des erfindungsgemäßen Steuerungsverfahrens wird die Geschwindigkeit der Bewegung mit der zweiten Geschwindigkeit durch eine weitere Bedienereingabe vorgegeben. Dies kann beispielsweise durch die Vorgabe der Geschwindigkeit mittels eines Potentiometers oder mittels Tastatureingabe erfolgen. Dadurch ist es möglich, die Bewegung mit der höheren Geschwindigkeit nicht nur gezielt auszulösen, sondern die Geschwindigkeit auch so zu beeinflussen, dass während der Durchführung der Bewegung eine Überwachung und Erkennung eventueller Kollisionen durch den Bediener möglich ist und die Bedienung dann rechtzeitig abgebrochen werden kann.

Ein Ausführungsbeispiel der Erfindung wird nachfolgend anhand der beigefügten Zeichnungen beschrieben.

Es zeigen:
- Fig. 1:: eine Abfolge von Vorschub- und Eingangbewegungen und den jeweiligen Bewegungsunterbrechungen in einem Ablauf gemäß dem Stand der Technik,
- Fig. 2:: eine Abfolge von Vorschub- und Eingangbewegungen mit Bewegungsunterbrechungen in einem durch eine erfindungsgemäße Steuerungsvorrichtung gesteuerten Ablauf.

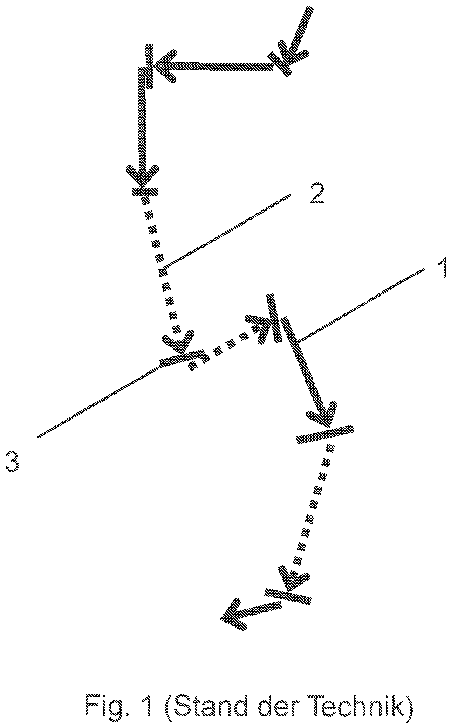

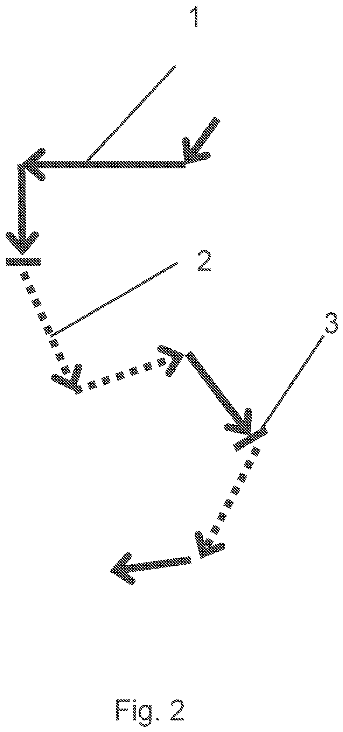

Fig. 1 zeigt eine Abfolge von Vorschub- und Eilgangbewegungen und den jeweiligen Bewegungsunterbrechungen in einem Ablauf aufeinanderfolgender Bewegungen gemäß dem Stand der Technik. Nach dem Durchführen eines Programmabschnitts bzw. eines Programmsatzes des NC-Programms, in dem eine langsame, in Fig. 1 und 2 mit durchgezogenen Pfeilen dargestellte Bewegung 1, beispielsweise eine Vorschubbewegung vorgegeben ist, wird zunächst stets eine Programmunterbrechung bzw. eine Bewegungsunterbrechung 3 durchgeführt. Bevor die nachfolgende Bewegung eingeleitet wird, unabhängig davon, ob langsame Vorschubbewegung 1 oder schnelle, in Fig. 1 und 2 mit unterbrochenen Pfeilen dargestellte Eilgangbewegung 2, wird zunächst der Programmablauf und damit der Bewegungsablauf mit einer Programmunterbrechung bzw. einer Bewegungsunterbrechung 3 angehalten. Die nachfolgende Bewegung muss somit stets durch eine Bedienereingabe ausgelöst werden, beispielsweise durch eine Tasteneingabe.

Somit wird das Programm und die Bewegung nach jedem einzelnen Bewegungsschritt 1, 2 angehalten, ohne dass der Bediener die Möglichkeit hat, aufeinanderfolgende langsame Bewegungen, beispielsweise unmittelbar aufeinanderfolgende Vorschubbewegungen, auch zusammenhängend ohne Zwischenunterbrechungen durchzuführen, da bei diesen eine Bewegungsunterbrechung 3 häufig nicht erforderlich ist, sondern der Bediener während der Durchführung der Bewegung beobachten kann, ob es zu Problemen kommen kann, und aufgrund der meist geringeren Bewegungsgeschwindigkeiten die Bewegung im Fehlerfall noch rechtzeitig anhalten kann.

In der in Fig. 2 dargestellten Abfolge von Vorschub- und Eingangbewegungen 1, 2 mit Bewegungsunterbrechungen bzw. Programmunterbrechungen 3 in einem durch eine erfindungsgemäße Steuerungsvorrichtung gesteuerten Ablauf erfolgt eine Unterbrechung 3 des Bewegungsablaufs hingegen nur dann, wenn nach einer langsamen Bewegung 1, beispielsweise einer Vorschubbewegung, unmittelbar eine schnelle Bewegung 2, beispielsweise eine Eilgangbewegung folgt. Nur bei Geschwindigkeitsunterschieden zwischen aufeinanderfolgenden Bewegungen, bei denen die Geschwindigkeit der nachfolgenden Bewegung um einen vorgegebenen Faktor größer ist als die Geschwindigkeit der vorangegehenden Bewegung, wird die Bewegung solange unterbrochen, bis die nachfolgende Bewegung durch einen Eingriff des Bedieners, beispielsweise durch eine Tasteneingabe, ausgelöst wird. Dadurch ist es möglich, mehrere Programmschritte, bei denen Bewegungen mit niedrigeren Geschwindigkeiten 1 durchgeführt werden, zusammenhängend ohne Unterbrechungen auszuführen, und den Programmablauf lediglich vor Programmschritten zu unterbrechen, bei denen Bewegungen mit höheren Geschwindigkeiten 2 durchgeführt werden, um dem Bediener hierfür eine Kontrollmöglichkeit zu geben und eine anschließende gesonderte Freigabe der Bewegung zu ermöglichen. Folgt auf eine Bewegung mirt hoher Geschwindigkeit hingegen eine Bewegung mit niedriger Geschwindigkeit, so wird keine Programmunterbrechung vorgenommen, und die Bewegung mit niedriger Geschwindigkeit 1 erfolgt unterbrechungsfrei unmittelbar im Anschluß an die Bewegung mit hoher Geschwindigkeit 2.

### BEZUGSZEICHENLISTE

- 1: langsame Bewegung, z.B. Vorschubbewegung
- 2: schnelle Bewegung, z.B. Eilgangbewegung
- 3: Programmunterbrechung bzw. Bewegungsunterbrechung

## Patentansprüche

1. Steuerungsvorrichtung zum Steuern einer Werkzeugmaschine,
wobei die Werkzeugmaschine und die Steuerungsvorichtung so gestaltet sind, dass ein an der Werkzeugmaschine angeordnetes Werkzeug und/oder Werkstück mit wenigstens einer ersten Geschwindigkeit (1) sowie mit wenigstens einer zweiten Geschwindigkeit (2) bewegbar ist,
wobei die Steuerungsvorrichtung eine Eingabevorrichtung zum Auslösen der Bewegung mit der zweiten Geschwindigkeit (2) aufweist,
**dadurch gekennzeichnet, dass**
die Steuerungsvorrichtung des Weiteren so gestaltet ist, dass beim Wechsel von einer Bewegung mit der ersten Geschwindigkeit (1) auf eine Bewegung mit der zweiten Geschwindigkeit (2) das Werkzeug oder das Werkstück vor dem Ausführen der Bewegung mit der zweiten Geschwindigkeit (2) zunächst angehalten (3) wird, wenn die zweite Geschwindigkeit (2) mindestens um einen vorgegebenen Faktor größer als die erste Geschwindigkeit (1) ist,
und
das nachfolgende Ausführen der Bewegung mit der zweiten Geschwindigkeit (2) durch eine Bedienereingabe an der Eingabevorrichtung ausgelöst wird.

2. Steuerungsvorrichtung nach Anspruch 1,
**dadurch gekennzeichnet, dass**
die Eingabevorrichtung eine Freigabetaste, ein Freigabe-Kippschalter, ein Freigabe-Drehschalter oder ein Potentiometer mit Zug- bzw. Druckschalterfunktion ist.

3. Steuerungsvorrichtung nach Anspruch 1 oder 2,
**dadurch gekennzeichnet, dass**
die Steuerungsvorrichtung eine weitere Eingabevorrichtung zum Beeinflussen der Geschwindigkeit der Bewegung mit der zweiten Geschwindigkeit (2) aufweist.

4. Steuerungsvorrichtung nach einem der vorangehenden Ansprüche,
**dadurch gekennzeichnet, dass**
die Bewegung mit der ersten Geschwindigkeit (1) eine Vorschubbewegung mit niedriger Geschwindigkeit und die Bewegung mit der zweiten Geschwindigkeit (2) eine Eilgangbewegung mit einer im Vergleich zu der Vorrschubbewegung hohen Geschwindigkeit ist.

5. Steuerungsverfahren zum Steuern einer Werkzeugmaschine mit den Schritten:
- Starten eines Programmablaufs durch einen Bediener, wobei der Programmablauf eine Abfolge von Bewegungen eines Werkzeugs und/oder eines Werkstücks mit unterschiedlichen Geschwindigkeiten (1, 2) aufweist,
- Anhalten des Programmablaufs durch eine Steuerungsvorrichtung der Werkzeugmaschine beim Wechsel von einer Bewegung mit einer ersten Geschwindigkeit (1) in eine nachfolgende Bewegung mit einer zweiten Geschwindigkeit (2), bevor die Bewegung mit der zweiten Geschwindigkeit (2) ausgeführt wird, wenn die zweite Geschwindigkeit (2) mindestens um einen vorgegebenen Faktor größer als die erste Geschwindigkeit (1) ist,
- Auslösen des Ausführens der zweiten Bewegung (2) durch eine Bedienereingabe an einer an der Steuerungsvorrichtung der Werkzeugmaschine vorgesehenen Eingabevorrichtung.

6. Steuerungsverfahren nach Anspruch 5,
wobei die Geschwindigkeit der Bewegung mit der zweiten Geschwindigkeit (2) durch eine weitere Bedienereingabe vorgegeben wird.

## Claims

1. A control device for controlling a machine tool,
wherein the machine tool and the control device are configured in such a way that a tool and/or a workpiece disposed on the machine tool can be moved with at least one first speed (1) and at least one second speed (2),
wherein the control device has an input device for triggering the movement with the second speed (2),
**characterized in that**
the control device is further configured in such a way that, when switching from a movement with the first speed (1) to a movement with the second speed (2), the tool or the workpiece is at first stopped (3) prior to the execution of the movement with the second speed (2) if the second speed (2) is greater that the first speed (1) by at least a predetermined factor,
and
the subsequent execution of the movement with the second speed (2) is triggered by an operator input on the input device.

2. The control device according to claim 1,
**characterized in that**
the input device is a release key, a release toggle switch, a rotary release switch or a potentiometer with a pull or push function.

3. The control device according to claim 1 or 2,
**characterized in that**
the control device has a further input device for manipulating the speed of the movement with the second speed (2).

4. The control device according to any one of the preceding claims,
**characterized in that**
the movement with the first speed (1) is a feed movement with low speed and the movement with the second speed (2) is a rapid traversing movement with a high speed compared to the feed movement.

5. A control method for controlling a machine tool, comprising the steps:
- starting a program sequence by an operator, wherein the program sequence includes a sequence of movements of a tool and/or workpiece with different speeds (1, 2),
- when switching from a movement with a first speed (1) to a subsequent movement with a second speed (2), stopping the program sequence by a control device of the machine tool prior to the movement with the second speed (2) being executed, if the second speed (2) is greater than the first speed (1) by at least a predetermined factor,
- triggering the execution of the second movement (2) by an operator input device provided on the control device of the machine tool.

6. The control method according to claim 5,
wherein the speed of the movement with the second speed (2) is predetermined by a further operator input.

## Revendications

1. Dispositif de commande pour commander une machine-outil,
dans lequel la machine-outil et le dispositif de commande sont conçus de telle sorte qu'un outil et/ou une pièce à usiner disposé(e) sur la machine-outil peut être déplacé(e) à au moins une première vitesse (1) et à au moins une deuxième vitesse (2),
le dispositif de commande comprenant un moyen d'entrée pour déclencher le mouvement à la deuxième vitesse (2),
**caractérisé en ce que**
le dispositif de commande est en outre conçu de telle sorte que lors du changement pour passer d'un mouvement à la première vitesse (1) à un mouvement à la deuxième vitesse (2), l'outil ou la pièce est d'abord arrêté(e) (3) avant que le mouvement à la deuxième vitesse (2) ne soit exécuté, si la deuxième vitesse (2) est supérieure à la première vitesse (1) au moins d'un facteur prédéterminé,
et
l'exécution successive du mouvement à la deuxième vitesse (2) est déclenchée par une entrée de l'opérateur au niveau du moyen d'entrée.

2. Dispositif de commande selon la revendication 1,
**caractérisé en ce que**
le moyen d'entrée est un bouton d'activation, un interrupteur à bascule d'activation, un interrupteur rotatif d'activation ou un potentiomètre ayant une fonction de bouton à tirer ou à pousser.

3. Dispositif de commande selon la revendication 1 ou 2,
**caractérisé en ce que**
le dispositif de commande comprend un autre moyen d'entrée pour influencer la vitesse du mouvement à la deuxième vitesse (2).

4. Dispositif de commande selon l'une des revendications précédentes,
**caractérisé en ce que**
le mouvement à la première vitesse (1) est un mouvement d'avance à faible vitesse, et le mouvement à la deuxième vitesse (2) est un mouvement rapide à une vitesse élevée par comparaison avec le mouvement d'avance.

5. Procédé de commande pour commander une machine-outil, comprenant les étapes consistant à :
- lancer l'exécution d'un programme par un opérateur, l'exécution du programme présentant une succession de mouvements d'un outil et/ou d'une pièce à usiner à différentes vitesses (1, 2),
- arrêter l'exécution du programme par un dispositif de commande de la machine-outil lors du changement pour passer d'un mouvement à une première vitesse (1) à un mouvement successif à une seconde vitesse (2) avant que le mouvement ne soit exécuté à la deuxième vitesse (2), si la deuxième vitesse (2) est supérieure à la première vitesse (1) au moins d'un facteur prédéterminé,
- déclencher l'exécution du deuxième mouvement (2) par une entrée de l'opérateur au niveau d'un moyen d'entrée prévu sur le dispositif de commande de la machine-outil.

6. Procédé de commande selon la revendication 5,
dans lequel la vitesse du mouvement à la deuxième vitesse (2) est spécifiée par une autre entrée de l'opérateur.
